(19) Europäisches Patentamt
European Patent Office
Office européen des brevets

(11) EP 2 253 823 B1

(12) # EUROPEAN PATENT SPECIFICATION

(45) Date of publication and mention of the grant of the patent:
**26.12.2012 Bulletin 2012/52**

(51) Int Cl.:
***F02D 41/02*** *(2006.01)* ***F02D 41/40*** *(2006.01)*

(21) Application number: **10161818.9**

(22) Date of filing: **04.05.2010**

(54) **Exhaust emission control device**

Abgasemissionssteuervorrichtung

Dispositif de contrôle d'émission d'échappement

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **18.05.2009 JP 2009120232**

(43) Date of publication of application:
**24.11.2010 Bulletin 2010/47**

(73) Proprietor: **Mitsubishi Jidosha Kogyo Kabushiki Kaisha**
**Tokyo 108-8410 (JP)**

(72) Inventors:
- **Tsuda, Masahiro**
**Tokyo (JP)**
- **Tashiro, Keisuke**
**Tokyo (JP)**
- **Kawashima, Kazuhito**
**Tokyo (JP)**

(74) Representative: **Heunemann, Dieter**
**Vossius & Partner**
**Siebertstrasse 4**
**81675 München (DE)**

(56) References cited:
**EP-A1- 1 544 428** **DE-A1- 10 322 148**
**JP-A- 2003 090 210** **JP-A- 2004 036 543**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 253 823 B1

**Description**

BACKGROUND OF THE INVENTION

The present invention relates to an exhaust emission control device which removes toxic substances included in exhaust gas from an internal combustion engine.

In an internal combustion engine (hereinafter referred to as an engine), an exhaust emission control device is arranged in an exhaust system to detoxify the exhaust gas. As this kind of exhaust emission control device, a three-way catalyst or an oxidation catalyst are adopted as means for controlling exhaust hydrocarbons (HC). Although this kind of three-way catalyst or oxidation catalyst has a high hydrocarbon (HC) purification efficiency, precious metal, which constitutes the oxidation catalyst, scarcely exhibits catalyst performance at an oxidation activating temperature or lower.

Thus, the catalyst purification performance is secured by making HC adsorbed on zeolite or the like in an operation area which does not reach an oxidation activating temperature, adopting an HC adsorption catalyst with a relatively large capacity which is adjusted so that this HC reaches oxidation activating temperature and HC adsorbed on zeolite or the like is desorbed and oxidized in an operation area after the activation of the precious metal, and adding this adsorption catalyst into an exhaust layout.

Meanwhile, in the case of a diesel engine, an NOx catalyst which purifies NOx, which is apt to be exhausted in a lean operation area, or a diesel particulate filter (hereinafter simply referred to as a filter) for removing exhausted particulates is adopted.

In the exhaust emission control device, generally, an oxidation catalyst is provided on the upstream side of an exhaust system of an engine, a filter is provided on the downstream side of the exhaust system of the engine, and particulates in exhaust gas are trapped by the filter. During this operation, when operation is in a state in which the temperature of the exhaust is relatively high, $NO_2$ is produced from NO in the exhaust gas by the action of the oxidation catalyst, this $NO_2$ is utilized as an oxidant to burn and remove the particulates trapped by the filter, thereby performing continuous regeneration of the filter.

In such a diesel engine, since the exhaust gas temperature is relatively low, an operation state where this continuous regeneration action is not obtained may be continued, and the deposition amount of the particulates may exceed an allowable amount. In this case, since the exhaust pressure rises excessively, it is necessary to forcibly remove the particulates.

As one of the means which removes particulates, for example, filter forced regeneration is performed by injecting additional fuel in an expansion stroke or exhaust stroke by a post injection, burning HC in the additional fuel, making high-temperature gas (about 600°C or higher) flow into the filter, and forcibly incinerating and removing particulates on the filter.

Meanwhile, as shown in Fig. 10, the HC adsorption catalyst adsorbs HC if the exhaust gas inlet temperature is about 200°C. If the operation area exceeds 250°C, the concentration (shown at the outlet of the HC adsorption catalyst) of the slip HC at the outlet of the catalyst increases as it approaches the high-temperature side with 350°C as a peak. During this time, desorption of adsorbed HC proceeds, the concentration of the slip HC in the exhaust gas is raised, and a desorption function deteriorates in an operation area exceeding 400°C.

Moreover, as shown in Fig. 11, in a case where the HC adsorption amount of the HC adsorption catalyst is near to an adsorption limit, when an acceleration operation begins at a point of time t1, the inlet temperature (thin solid line) of the HC adsorption catalyst increases suddenly, subsequently, the front stage temperature (two-dot chain line) of the HC adsorption catalyst rises, and subsequently, the rear stage temperature (thick solid line) of the HC adsorption catalyst begins to rise. Then, acceleration is stopped at a point of time t2 after the elapse of about 45 seconds, and idling operation begins. In this case, the inlet temperature (thin solid line) decreases suddenly, the front stage temperature (two-dot chain line) increases suddenly and decreases, and the rear stage temperature (tick solid line) tends to increase excessively suddenly.

This is because that HC of an amount relatively near to an adsorption limit on the HC adsorption catalyst is burnt, the front stage temperature (two-dot chain line) drops after a peak, and the rear stage temperature (thick solid line) causes an excessive temperature rise due to excessive burning of HC of an amount nearer to an adsorption limit amount. The melting loss on the HC adsorption catalyst may be brought about.

In addition, in a case where the HC adsorption amount of the HC adsorption catalyst is relatively small, an acceleration operation begins at a point of time t1, and when a change to an idling operation is made at a point of time t2, adsorbed HC which is burnt at the front stage temperature (thin broken line) or rear stage temperature (thick broken line) is small. Therefore, these temperatures drop together through a relatively small peak, and occurrence of the excessive temperature rise is prevented.

In addition, in JP-A-2004-36543, a total HC adsorption amount HCadsorb is obtained in every control cycle, on the basis of information on catalyst temperature T, HC concentration HCpost and the like, and when the total HC adsorption amount HCadsorb exceeds an allowable amount HCmax, the post injection is prohibited to prevent an excessive temperature rise of the oxidation catalyst caused by the sudden burning of a large amount of HC, and prevent the damage of the oxidation catalyst caused by the excessive temperature rise.

Meanwhile, the following problems occur in the case where both of the filter and the HC adsorption catalyst are arranged in the exhaust system of such a diesel engine.

Compared with a gasoline engine, the exhaust gas temperature of the diesel engine is low, and the operation of the engine at an oxidation activating temperature or lower can be easily continued. For this reason, in the HC adsorption catalyst, HC adsorption tends to proceed excessively. It is assumed that during the operation in such an excessive HC adsorption state, filter forced regeneration timing is reached. In this case, when the forced regeneration of the filter is performed, high-temperature gas (about 600°C or higher) flows into the filter, and high-temperature gas exceeding the oxidation activating temperature flows into the HC adsorption catalyst. Then, a large amount of HC adsorbed on the HC adsorption catalyst is accelerated, and a sudden and excessive temperature rise is caused. As a result, the deterioration or in the worst case, melting loss of the HC adsorption catalyst may be brought about.

In addition, in the technique related to JP-A-2004-36543, when the total HC adsorption amount HCadsorb exceeds an allowable amount HCmax, the post injection can be prohibited to prevent in advance the damage of the oxidation catalyst caused by an excessive temperature rise. However, when the forced regeneration control of the filter of the diesel engine is performed in an operation area where the total HC adsorption amount reaches the allowable amount HCadsorb, high-temperature gas (about 600°C or higher) flows into the filter, and simultaneously also flows into the HC adsorption catalyst. In this case, during the forced regeneration of the filter, an excessive temperature rise of the HC adsorption catalyst is apt to occur. This cannot be prevented, and the deterioration of the HC adsorption catalyst or the melting loss of the catalyst may be brought about.

## SUMMARY

It is therefore an object of the invention to provide an exhaust emission control device capable of preventing an excessive temperature rise of an HC adsorption catalyst during forced regeneration of a filter and performing the forced regeneration of the filter.

In order to achieve the object, according to the invention, there is provided an exhaust emission control device comprising:

a filter which traps a particulate in an exhaust system of an internal combustion engine;
an HC adsorption catalyst which is provided in the exhaust system and which adsorbs and desorbs hydrocarbon;
trapping amount calculating means which calculates trapping amount of the particulate trapped by the filter;
adsorbed amount calculating means which calculates adsorbed amount of the hydrocarbon adsorbed on the HC adsorption catalyst;
HC adsorption catalyst regeneration control means which carries out desorption processing of the hydrocarbon adsorbed on the HC adsorption catalyst; and
filter regeneration control means which carries out forced regeneration of the filter when the trapping amount of the particulate exceeds an amount,
wherein the HC adsorption catalyst regeneration control means carries out the desorption processing of the hydrocarbon adsorbed on the HC adsorption catalyst before the filter regeneration control means carries out the forced regeneration of the filter, when the adsorbed amount of the hydrocarbon exceeds an amount.

The exhaust emission control device may further include temperature-raising means which raises temperature of the HC adsorption catalyst. The HC adsorption catalyst regeneration control means may control the temperature-raising means so that the HC desorption catalyst is held at an oxidation activating temperature or higher and at less than temperature of the forced regeneration of the filter thereby, carrying out the desorption processing.

The temperature-raising means may carry out supply of hydrocarbon by an expansion stroke injection of the internal combustion engine.

A time during which the temperature of the HC adsorption catalyst is raised may be set in accordance with a catalyst capacity of the HC adsorption catalyst.

The filter and the HC adsorption catalyst may be arranged in this order from upstream of the exhaust system.

## BRIEF DESCRIPTION OF THE DRAWINGS

Fig. 1 is an overall configuration view of an exhaust emission control device according to a first embodiment of the invention.

Fig. 2 is a perspective view of an exhaust system used in the exhaust emission control device.

Figs. 3 (a) and 3 (b) are schematic views illustrating the HC adsorption and desorption on a catalyst surface in an HC adsorption catalyst used in the exhaust emission control device of Fig. 1, Fig. 3(a) is a view illustrating HC behavior at an oxidation activating temperature or lower, and Fig. 3(b) is a view illustrating HC behavior at the oxidation activating temperature or higher.

Figs. 4 (a) and 4 (b) are explanatory views in a case where HC supply means used in the exhaust emission control device of Fig. 1 drives an injector in a normal injection mode, Fig. 4(a) shows a driving signal, and Fig. 4(b) shows injection amount.

Figs. 5(a) and 5(b) are explanatory views in a case where NOx reduction operation control means, filter forced regeneration operation control means, and HC adsorption catalyst forced regeneration control means used in the exhaust emission control device selectively drives the injector in an HC addition injection mode, Fig. 5(a) shows a driving signal, and Fig. 5(b) shows injection amount.

Fig. 6 is a characteristic diagram of an ordinary change in slip HC exhaust amount in HC adsorption catalyst regeneration control performed by the exhaust emission control device of Fig. 1.

Fig. 7 is a characteristic diagram with the lapse of time when the HC adsorption amount of the HC adsorption catalyst in the HC adsorption catalyst regeneration control performed by the exhaust emission control device of Fig. 1 changes to zero.

Fig. 8 is a flow chart of a regeneration control routine performed by the exhaust emission control device of Fig. 1.

Fig. 9 is a block explanatory view of HC adsorption arithmetic processing of the HC adsorption catalyst, which is performed by an exhaust emission control device of an internal combustion engine according to a modified example of the invention.

Fig. 10 is a fluctuation characteristic diagram of slip HC concentration at a temperature rise of the HC adsorption catalyst.

Fig. 11 is a characteristic diagram of respective temperature rise changes at the front stage of a catalyst, the rear stage of the catalyst, and the inlet of the catalyst, in cases where the HC adsorption amount of the HC adsorption catalyst is near to an adsorption limit, or is not near to the adsorption limit.

DETAILED DESCRIPTION OF EMBODIMENTS

Hereinafter, a diesel engine (hereinafter simply referred to as an engine) 1 that is an internal combustion engine which mounts an exhaust emission control device serving as one embodiment of the invention will be described with reference to Fig. 1.

In the engine 1, four combustion chambers 3 are arranged in series. Each combustion chamber 3 is provided with a fuel injection valve 8 which injects fuel directly, each fuel injection valve 8 is connected to a common rail 15 (accumulation chamber), and the fuel (gas oil) of a fuel tank 14 is supplied to the common rail 15 under pressure by a high-pressure fuel injection pump 13. These constitute a fuel supply device MF. Here, the fuel injection amount (Qp+Qm in Fig. 4(b)) and injection timing (tp and tm in Figs. 4(a) and 4(b)) of the fuel injection valve 8 are controlled according to a fuel control signal output from an engine control unit (hereinafter abbreviated as ECU) 12 that is control means.

An intake port (not shown) which extends from one side of each combustion chamber 3 communicates with an intake manifold 901, and the intake manifold 901 is connected to an intake pipe 9 which forms an intake passage I. The intake pipe 9 is introduced into the intake manifold 901 after the amount of intake air from an air cleaner 11 is adjusted by an intake throttle valve 33. In addition, the driving of an actuator 331 of the intake throttle valve 33 is controlled by an ECU 12 which will be described later. An exhaust port (not shown) which extends from the other side of each combustion chamber 3 communicates with an exhaust manifold 4, and an exhaust passage R is connected to the exhaust manifold 4. The exhaust passage R includes a front stage oxidation catalyst 2 which is directly connected to the exhaust manifold 4, an exhaust pipe 5, and NOx storing reduction catalyst 21, a particulate-removing filter 22, an HC adsorption catalyst 19 which constitutes a rear stage oxidation catalyst, and a muffler (not shown) downstream thereof.

The fuel supply device MF guides the high-pressure fuel of the engine-driven high-pressure fuel injection pump 13 to the common rail 15 after the pressure of the fuel is made constant by a fuel pressure regulating unit 141 which is controlled by fuel pressure control means 121 in the ECU 12, and supplied the high-pressure fuel to each injector 8 via an injection pipe 16 branching and extending from the common rail 15. In addition, the fuel supply device MF has a function as temperature-raising means, in the invention.

A magnetic valve 17 of the injector 8 is connected to an injection control unit 122 via an injector driver 10. The injection control unit 122 outputs an output Dj signal according to calculated injection fuel amount and injection timing to the magnetic valve 17, and controls the injection of the injector 8.

Here, the injection control unit 122 obtains a fuel injection amount Uf according to an engine rotation number Ne and an accelerator pedal depression amount θa. Moreover, the injection timing is derived by adding the correction according to operating conditions to a well-known basic advance angle value. In addition, as shown in Figs. 5(a) and 5(b), output signal (normal injection M1 and HC addition injection M2) equivalent to calculated injection timing and fuel injection amount Uf are set in the injector driver 10, and are output to the magnetic valve 17 of the fuel injection unit 11, thereby performing pilot injection Qfp (time width Tp), main injection Qfm (time width Tm), and after-injection Qfa (time width Ta: injection in an expansion stroke) and at proper times, and post injection Qfd (time width Td: injection in an exhaust stroke), which are fuel injections of the injector 8.

Next, the front stage oxidation catalyst 2 is connected to the exhaust manifold 4, and is formed with relatively small capacity so as to be early activated efficiently by the exhaust gas of the engine. The front stage oxidation catalyst 2 oxidizes nitrogen oxide (NO) in the emissions exhausted from the engine 1 with oxygen $O_2$ to produce high-activity nitrogen dioxide ($NO_2$), i.e., promotes the reaction of "$2NO+02 \rightarrow 2NO_2$". Here, platinum-based oxidation catalysts are adopted.

The NOx storing reduction catalyst 21 provided downstream of the exhaust pipe 5 absorbs NOx ($NO_2$ and NO) in the emissions when the air-fuel ratio of inflowing exhaust gas is lean, and performs a release action of NOx which releases the absorbed NOx when the inflow exhaust gas becomes rich.

That is, the NOx storing reduction catalyst 21 causes an oxidation reaction of oxygen in the emissions with NOx (NO is a main component) in the emissions on platinum Pt, thereby producing $NO_2$, when the exhaust gas has a lean air fuel ratio. Additionally, $NO_2$ in the inflowing emissions is diffused into an absorbent while being further oxidized on platinum Pt and coupled with barium oxide BaO serving as an absorbent. For this reason, NOx in the emissions is absorbed into the NOx storing reduction catalyst 21 under a lean atmosphere. Additionally, when the oxygen concentration in the inflowing emissions decreases, i.e., when the air-fuel ratio of the emissions changes to a lean side, the $NO_2$ production amount on platinum Pt decreases, the reaction proceeds in a reverse direction, and NOx in the adsorbent is released from the NOx storing reduction catalyst 21 in the form of NOx. In this case, when components, such as HC and CO, exist in the emissions, $NO_2$ is reduced to the $N_2$ by these components on platinum Pt.

In this embodiment, since a diesel engine serving as the engine 1 is used, engine emissions normally have a lean air-fuel ratio, and the NOx storing reduction catalyst 21 absorbs NOx in the emissions. However, when the absorbed NOx amount of the NOx storing reduction catalyst 21 increases as a rich operation area becomes small, a limit adsorption state where NOx in emissions cannot be absorbed is brought about. For this reason, at an early time before absorbed NOx amount is saturated, it is necessary to perform rich operation forcibly to emit NOx from the NOx storing reduction catalyst 21, and reduce and purify NOx.

The particulate-removing filter 22 provided downstream of the NOx storing reduction catalyst 21 is disposed in the exhaust passage R so that emission particulates (particulates), such as carbons included in the exhaust gas of the diesel engine, are not released to the atmosphere. The filter 22 is made of ceramic, for example, cordierite including Mg, Al, and Si as main components, and is formed as a honeycomb structure obtained by stacking a number of exhaust gas passages r2 in parallel towards the direction of the exhaust passage R. Here, the exhaust gas passages r2 which are adjacent to each other are formed so that any one side of the upstream and downstream sides of the exhaust passage R is alternately closed by an edge portion 23. Thereby, the exhaust gas which has flowed into the upstream side permeates through a passage facing wall b of each exhaust gas passage r2-1, reaches each exhaust gas passage r2-2 the outlet of which is formed downstream of the exhaust passage R, and is emitted. In this case, the particulates in the exhaust gas are filtered by the passage facing wall b, and are incinerated and removed when a high-temperature exhaust gas which exceeds a predetermined temperature (500 to 600°C) has flowed in.

The HC adsorption catalyst 19 that is a rear stage oxidation catalyst arranged downstream of the filter 22 includes a sufficiently large capacity, and sufficiently secures an oxidation function, compared to the front stage oxidation catalyst 2. The NOx storing reduction catalyst 21 includes zeolite as a main component, adsorbs HC in exhaust gas at a temperature which is lower than an oxidation activating temperature (for example, 250°C) as shown in Fig. 3(a), and releases adsorbed HC and oxidizes adsorbed HC or released HC to detoxicate the HCs as $CO_2+H_2$, which is emitted to the atmosphere, at the oxidation activating temperature or higher as shown in Fig. 3(b).

Here, as shown in Figs. 6 and 10, when an exhaust gas inlet temperature slip HCin which becomes the ambient temperature of the HC adsorption catalyst 19 during normal operation is about 200°C, there is almost no difference or a slight difference d1 (refer to Fig. 10) in slip HC concentration at the inlet and outlet of the HC adsorption catalyst. On the other hand, when a temperature rise operation begins, i.e., the temperature of the exhaust gas inlet temperature slip HCin is raised to 250 to 400°C, as shown in Fig. 10, the slip HC concentration has a relatively large difference d2 (HC release increases suddenly) at the inlet and outlet of the HC adsorption catalyst at about 350°C. That is, in this case, it is apparent that desorbed HC is oxidized, burned and emitted, and the HC adsorption catalyst 19 exceeds 250°C, and is held in a temperature region of 400°C or lower, so that it is inferred that the HC release amount can be reliably increased and adsorbed HC can be incinerated and removed in this temperature region.

On the other hand, the ECU 12 used in the exhaust emission control device has a number of ports at an input/output circuit thereof, and has connected thereto an air flow sensor 7 which detects intake air amount Qa, an accelerator pedal opening degree sensor 24 which detects the accelerator pedal opening degree $\theta a$ of the engine 1, a crank angle sensor 25 which detects crank angle information $\Delta\theta$, an exhaust gas temperature sensor 26 serving as exhaust gas temperature detecting means which detects the exhaust gas temperature (hereinafter simply referred to as exhaust gas temperature gt) provided directly downstream of the filter 22, a water temperature sensor 27 which detects water temperature wt, an atmospheric pressure sensor 28 which outputs atmospheric pressure Pa, and a differential pressure sensor 29 which outputs the longitudinal differential pressure dp of the filter 22. In addition, the crank angle information $\Delta\theta$ is used for the derivation of the engine rotational number Ne in the ECU 12, and is used for the control of the fuel injection timings (tp, tm, ta: refer to Figs. 4(a) and 4(b) and Figs. 5(a) and 5(b)).

The ECU 12 fetches detection signals from the respective sensors 24, 25, 26, 27, 28, 29, and functions as trapping amount calculating means 122-3a, adsorption amount calculating means 122-4a, filter forced regeneration control means 122-3, and HC adsorption catalyst regeneration control means 122-4. That is, the ECU 12 includes functions as the fuel pressure control unit 121 and the injection control unit 122, in addition to the well-known engine control processing function.

Especially, the injection control unit 122 controls the injector 8 in a normal injection mode M1 according to a control signal from the ECU 12 which will be described later, as injection control means 122-1 of the fuel supply device MF. Moreover, the injection control unit 122 functions as NOx reduction operation control means 122-2 which makes the downstream NOx storing reduction catalyst 21 rich along with an exhaust gas temperature rise, and performs release and reduction purification of NOx.

Here, the ECU 12 sets a counting amount qn corresponding to the NOx amount absorbed per unit time by the NOx storing reduction catalyst 21, by a counting amount map (not shown) according to the engine rotation number Ne and fuel supply amount Q as an engine load. Moreover, when the number of the counting is sequentially integrated during operation, and an integrated value exceeds a predetermined threshold valve, a rich operation command S is issued, and the NOx reduction operation control means 122-2 is driven in the mode of the post injection Qfd (time width Td: injection in an exhaust stroke) to perform the release and reduction purification of NOx and perform the reduction purification operation of NOx.

Moreover, the injection control unit 122 functions as filter forced regeneration control means 122-3. The filter forced regeneration control means 122-3 has built therein the function as the trapping amount calculating means 122-3a which calculates the deposition amount (amount of particulates trapped by the filter) Ms of the filter 22.

Here the deposition amount Ms of the filter 22 is correlated with the longitudinal differential pressure dp of the filter, and emission flow rate. For this reason, the trapping amount calculating means 122-3a obtains the longitudinal differential pressure dp in a predetermined emission flow rate, and calculates the deposition amount Ms of the filter from the longitudinal differential pressure dp.

Especially, the filter forced regeneration control means 122-3 determines whether the particulates of the filter 22 has reached a limit deposition amount when the differential pressure dp in an operation area where the emission flow rate has a predetermined value exceeds a threshold value. In this case, before a filter forced regeneration command Sdpf is issued, the filter forced regeneration control means 122-3, first, outputs an HC adsorption catalyst driving command Swait during a predetermined elapsed time Tdri in order to raise the temperature of the HC adsorption catalyst 19 to the oxidation activating temperature or higher by the predetermined elapsed time Tdri, and then issues a filter forced regeneration command Sdpf.

Then, when the filter forced regeneration command Sdpf is output, the filter forced regeneration control means 122-3 drives the injector 8 in a mode M2d (refer to Figs. 5(a) and 5(b)) of the post injection Qfd (time width Td: injection in an exhaust stroke) to force a high-temperature exhaust gas exceeding an incineration temperature (500 to 600°C) to flow into the filter 22, thereby performing the incineration removal of particulates.

Moreover, the injection control unit 122 functions as the HC adsorption catalyst regeneration control means 122-4. Here, the HC adsorption catalyst 19 is located on the most downstream side of an exhaust system, and has a function to adsorb, oxidize, and desorb HC in emissions. However, when an operation area where exhaust gas temperature is low continues, an increase in adsorbed HC proceeds, and, when a forced regeneration operation of a filter located on the upstream is carried out, an adsorption state where an excessive temperature rise is caused beyond a heat-resistant temperature is brought about. If the adsorption proceeds further, a limit adsorption state where HC in emissions cannot be absorbed is brought about. For this reason, if the amount of HC adsorbed when the particulate trapping amount has reached a limit trapping amount exceeds a predetermined amount which causes an excessive temperature rise during filter forced regeneration, it is necessary to perform the incineration of adsorbed HC forcibly before the filter forced regeneration, and oxidize and desorb HC from the HC adsorption catalyst 19. Additionally, when the limit adsorption amount of the HC adsorption catalyst is reached, the incineration of adsorbed HC may be forcibly performed at a time before saturation irrespective of the filter forced regeneration, and HC may be oxidized and desorbed from the HC adsorption catalyst 19.

This, the HC adsorption catalyst regeneration control means 122-4 has a function to calculate an HC adsorption amount as adsorption amount calculating means 122-4a. Then, when the information showing that the particulate trapping amount reaches a limit deposition amount has been received, the HC adsorption catalyst regeneration control means 122-4 determines whether the newest HC adsorption amount at this time reaches the limit adsorption amount of the HC adsorption catalyst, and if it is determined to have reached the limit adsorption amount, this control means issues an HC adsorption catalyst regeneration command Str.

Here, the adsorption amount calculating means 122-4a that is one functional unit of the HC adsorption catalyst regeneration control means 122-4 calculates the HC adsorption amount.

Here, an HC concentration Mhcin at the inlet of the HC adsorption catalyst 19 is detected in advance by an inlet HC concentration sensor 36, an HC concentration Mhcout at the outlet is detected in advance by the outlet HC concentration sensor 37, and both data are fetched. Moreover, an intake mass flow rate Qair(n) is fetched by the air flow sensor 7. In addition, a current HC adsorption amount Mmon (n) is calculated in the following Expression (1), using a mol conversion coefficient Kmol of exhaust gas, and a previous HC adsorption amount Mmon (n-1).

$$Mmon(n)=Mmon(n-1)+[\{Mhcin-Mhcout\}xQair(n)xKmol]xdt \quad (1)$$

Here, the current HC adsorption amount Mmon(n) is calculated in every control cycle dt using Expression (1), on the basis of actual measurement values of the inlet HC concentration Mhcin of the inlet HC concentration sensor 36 and the outlet HC concentration Mhcout of the outlet HC concentration sensor 37.

After this HC adsorption amount Mmon(n) is calculated, the HC adsorption catalyst regeneration control means 122-4 further functions as follows.

As shown in Fig. 7, in the HC adsorption catalyst, the outlet HC concentration Mhcout is small relative to the inlet HC concentration Mhcin and this difference dHC is large at the beginning. When the deposition amount of adsorbed HC increases, the adsorption allowable amount decreases, i.e., the outlet HC concentration Mhcout approaches the inlet HC concentration Mhcin without adsorption, and the inlet HC concentration Mhcin and the outlet HC concentration Mhcout coincide with each other when the adsorption amount is zero. For this reason, by obtaining the difference dHC, the adsorption allowable amount of the HC adsorption catalyst can be determined. That is, as shown in Fig. 7, the timing tf of reaching a predetermined amount or a limit adsorption amount can be determined.

Moreover, the HC adsorption catalyst regeneration control means 122-4 may issue the HC adsorption catalyst regeneration command Str, on the basis of the timing tf of reaching the limit adsorption amount. In this case, the HC adsorption catalyst regeneration control means 122-4 has a function to control the injection of the fuel supply device MF serving as temperature-raising means. That is, the injector 8 is driven in the after-injection Qfa (time width Ta: injection in an expansion stroke). Thereby, temperature is raised so that the temperature of the exhaust gas exhausted from combustion chambers of an internal combustion engine exceeds 250°C. In this case, especially, the exhaust gas of which the temperature has been raised passes through the NOx storing reduction catalyst 21 and the filter 22, and reaches the HC adsorption catalyst 19. Here, injection is controlled so that HC adsorbed on the HC adsorption catalyst 19 is held at a temperature which is less than 500 to 600°C (here, less than 400°C) that is less than the forced regeneration temperature of a filter at the oxidation activating temperature or higher (250°C).

Moreover, the HC adsorption catalyst regeneration control means 122-4 performs the temperature rise control of such an oxidation activating temperature or higher during preset elapsed time, according to the capacity of the HC adsorption catalyst. For example, the injector 8 is driven in the after-injection Qfa during 10 seconds, and is stopped after the elapse of 10 seconds for which the elimination of adsorbed HC is regarded as having been completed.

Immediately after this, a filter forced regeneration command S is output, and the filter forced regeneration control means 122-3 drives the injector 8 in the post injection Qfd (time width Td: injection in an exhaust stroke). In this case, a high-temperature exhaust gas exceeding an incineration temperature (500 to 600°C) is forced to flow into the filter 22, thereby performing incineration removal of particulates. At this time, a high-temperature exhaust gas falling below an incineration temperature (500 to 600°C) also flows into the downstream HC adsorption catalyst. However, since adsorbed HC is eliminated in advance from the HC adsorption catalyst 19, an excessive temperature rise resulting from the burning of the adsorbed HC by the HC adsorption catalyst does not occur, and the melting loss of the HC adsorption catalyst due to the excessive temperature rise can be prevented.

Next the filter forced regeneration and HC adsorption catalyst regeneration control processing which are performed by ECU at a predetermined point of time during a main routine (not shown) will be described along a regeneration control routine of Fig. 8.

In the main routine (not shown) before this regeneration control routine, various kinds of operation information data are fetched and stored in a predetermined storage area. Moreover, when an internal combustion engine is in normal operation, the fuel pressure control unit 121 or HC supply means 122-1 of the injection control unit 122 controls the injector 8 in a normal injection mode M1.

When the process reaches Step s1 of the regeneration control routine during the control processing in every control cycle dt, the current HC adsorption amount Mmon (n) is fetched. In addition, the current HC adsorption amount Mmon(n) is calculated during the main routine (not shown) by using Expression (1), on the basis of the inlet HC concentration Mhcin of the inlet HC concentration sensor 36 and the outlet HC concentration Mhcout of the outlet HC concentration sensor 37.

When the process reaches Step s2, the deposition amount Ms of the filter 22 in the current control cycle dt is fetched. From this value, whether the differential pressure dp in the operation area where the emission flow rate has a predetermined value exceeds a threshold value is determined in advance during the main routine (not shown). In this case, if it is determined that the particulates of the filter 22 have reached the limit deposition amount DPFf, the process proceeds to Step s3. If the particulates have not reached the limit deposition amount, the control of the current regeneration control routine is finished, and the process proceeds to the main routine.

When the process reaches Step s3, it is determined whether the value of the HC adsorption amount Mmon (n) that is a monitor amount, which is fetched in Step s1, exceeds a limit adsorption amount Mmon1 that is a setting value according to the capacity of the HC adsorption catalyst. If the value does not exceed the limit adsorption amount, the process proceeds directly to Step s7, and if the value exceeds the limit adsorption amount Mmon1, this point of time t-a is regarded as the timing tf (a point of time when the filter has reached the limit deposition amount DPFf) with which the values have reached the limit adsorption amount, the HC adsorption catalyst regeneration command Str is issued, and the process proceeds to s4.

In Step S4, the HC adsorption catalyst regeneration control means 122-4 used to drive the injector 8 in the after-injection Qfa (time width Ta: injection in an expansion stroke), supply HC in the expansion stroke to the combustion chambers, and raise temperature so that the temperature of the exhaust gas exhausted from the combustion chambers of the internal combustion engine exceeds 250°C and maintains less than 400°C. The exhaust gas of which the temperature has been raised passes through the NOx storing reduction catalyst 21 and the filter 22, and reaches the HC adsorption catalyst 19. Here, HC adsorbed on the HC adsorption catalyst 19 is heated to the oxidation activating temperature or higher (250°C or higher), and is incinerated. Injection is controlled so that the heating temperature in this case is maintained at the oxidation activating temperature or higher and at less than a forced regeneration temperature (500 to 600°C) of the filter, here less than 400°C.

By the temperature rise control of such an oxidation activating temperature or higher, the adsorbed HC from the HC adsorption catalyst is desorbed, oxidized and incinerated. In this case, the emission amount at the outlet of the HC adsorption catalyst 19, for example, increases from a point of time t-a shown in Fig. 6. If a point of time t-b when a change in the emission amount of adsorbed HC at the inlet and outlet becomes zero is exceeded, a state where the incineration processing of the adsorbed HC is paused is brought about. Here, the time taken to reach the point of time t-b from the point of time t-a becomes a value corresponding to the capacity of the HC adsorption catalyst 19, for example, becomes about 10 seconds.

Thus, the forced regeneration time of the HC adsorption catalyst 19 can be optimized by performing the heating control of the HC adsorption catalyst 19 at the oxidation activating temperature or higher (250°C or higher) and at less than the forced regeneration temperature of the filter 22, for example, during 10 seconds that is a predetermined elapsed time set according to the capacity of the HC adsorption catalyst. This can prevent useless forced regeneration driving, and can prevent the subsequent forced regeneration control of the filter 22 from being excessively delayed.

Since the exhaust gas temperature is less than the forced regeneration temperature of the filter during the forced regeneration of the HC adsorption catalyst 19, incineration of particulates is not performed, and the temperature of the HC adsorption catalyst 19 is prevented from rising excessively from this point.

When the process reaches Step s5, it is determined whether preset elapsed time, for example, the integrated time Tw after the HC adsorption catalyst regeneration command Str has passed waiting time Tw, the injector 8 is driven in the after-injection Qfa during the waiting time, the driving of the after-injection Qfa is stopped after the elapse of 10 seconds, and the process proceeds to Step s6.

Suppose that the process reaches Step s6 from Step s5 or Step s3.

Since it is determined herein that the particulates of the filter 22 have already reached the limit deposition amount, the filter forced regeneration control means 122-3 drives the injector 8 in the post injection Qfd (time width Td: injection in an exhaust stroke), the high-temperature exhaust gas exceeding the incineration temperature (500 to 600°C) is forced to flow into the filter 22, thereby performing the incineration removal of the particulates.

Next, when the process reaches Step s7, and it is determined that a forced regeneration time set based on the capacity of the filter 22 has elapsed, and that the differential pressure dp in the operation area where the emission flow rate has a predetermined value has reached a predetermined regeneration completion differential pressure dp0, the filter forced regeneration command Sdpf is stopped, the injector 8 returns to the normal injection mode M1 from the post injection Qfd (time width Td: injection in an exhaust stroke), and the process returns to the main routine (not shown).

In a case where the filter forced regeneration and HC adsorption catalyst regeneration control is performed along such a regeneration control routine of Fig. 8, even if HC exceeding a setting amount has been adsorbed in advance by the HC adsorption catalyst, HC is oxidized, desorbed, and eliminated before the forced regeneration control of this filter. For this reason, even if the forced regeneration processing of the filter 22 at a relatively high temperature (500°C to 600°C) is performed after that, as the HC excessively adsorbed on the HC adsorption catalyst is oxidized, occurrence of an excessive temperature rise can be prevented, and the deterioration or melting loss of the HC adsorption catalyst can be avoided.

Moreover, even if the exhaust gas temperature during the forced regeneration of the filter 22 exceeds the heat-resistant temperature of the HC adsorption catalyst 19, since the HC adsorption catalyst 19 is arranged on the downstream side of the filter 22, the heat radiation of the ambient air from an outer wall member of an exhaust system proceeds until the ambient air reaches the HC adsorption catalyst 19, and the exhaust gas temperature drops relatively. Thus, the melting loss of the downstream HC adsorption catalyst 19 can be prevented from this point.

In the exhaust emission control device of an internal combustion engine of Fig. 1, when the HC adsorption amount Mmon(n) read using Expression (1) in Step s1 has no change compared with a previous value, i.e., has reached a point of time tf where a new HC adsorption amount becomes zero (refer to Fig. 7), the subsequent HC adsorption capability of the HC adsorption catalyst is eliminated, and emission of HC occurs. Therefore, it can be properly determined that this timing tf is the incineration timing of the adsorbed HC adsorbed on the HC adsorption catalyst. Thus, when the process reaches Step S4, HC adsorption catalyst regeneration control means 122-4 is used to drive the injector 8 in the after-injection Qfa (time width Ta: injection in an expansion stroke), and raise the exhaust gas temperature so as to be maintained at a temperature which exceeds 250°C and is less than 400°C. Thereby, the melting loss of the HC adsorption catalyst can be prevented by rapidly incinerating and eliminating HC near an adsorption limit amount on the HC adsorption catalyst, without causing an excessive temperature rise.

In the above description, in the exhaust emission control device of an internal combustion engine of Fig. 1, the HC adsorption amount Mmon(n) has been read using Expression (1), on the basis of the inlet HC concentration Mhcin of the inlet HC concentration sensor 36 and the outlet HC concentration Mhcout of the outlet HC concentration sensor 37. Instead of this, however, the HC adsorption amount Mmon(n) calculated by using an estimation value may be read.

In this case, HC adsorption catalyst forced regeneration control means 122-4' used in the exhaust emission control device of an internal combustion engine of Fig. 1 calculates the HC adsorption amount Mmon(n), using the following Expression (2) by the estimation calculation processing shown in Fig. 9.

Here, estimation values used in Expression (2) will be described. First, the HC inflow amount Min(n) into the HC adsorption catalyst is given by a map m-1 in which the engine rotation number Ne and an intake mass flow rate QFIN are used as arguments, and an HC purification efficiency ηoxi(n) of the front stage oxidation catalyst 2 is given by a map m-2 in which an air-fuel ratio average value AFSAV of the air-fuel ratio sensor 41 (shown by two-dot chain lines in Fig. 1) and an upstream catalyst temperature Tc (an upstream catalyst temperature sensor 42 shown by two-dot chain lines shown in Fig. 1 is used) of the front stage oxidation catalyst 2 are used as arguments.

Moreover, an HC adsorption efficiency ηad(n) of the HC adsorption catalyst is given a map m-3 in which the air-fuel ratio average value AFSAV of the air-fuel ratio sensor and the catalyst temperature slip HC of the HC adsorption catalyst 19 are used as arguments, and an HC oxidation and desorption amount Mdesorp(n) is given by a map m-4 in which the air-fuel ratio average value AFSAV of the air-fuel ratio sensor, and the catalyst temperature slip HC of the HC adsorption catalyst 19 are used as arguments.

$$\text{HC Adsorption Amount Mmon}(n) = \text{HC Adsorption Amount Mmon}(n-1) + \text{Min}(n) \times \{1-\eta\text{oxi}(n)\} \times \eta\text{ad}(n) - \text{Mdesorp}(n) \quad (2)$$

That is, in Expression (2) in the HC adsorption catalyst forced regeneration control means 122-4', the engine rotation number Ne, the intake mass flow rate QFIN, the HC purification efficiency ηoxi(n) of the front stage oxidation catalyst 2, the air-fuel ratio average value AFSAV, the upstream catalyst temperature Tc of the front stage oxidation catalyst 2, the HC adsorption efficiency ηad(n) of the HC adsorption catalyst 19, the air-fuel ratio average value AFSAV of exhaust gas, and the catalyst temperature slip HC of the HG adsorption catalyst 19 are read.

In addition, the value "Min (n) x{1-ηoxi(n)}" obtained by subtracting the HC purification amount in the front stage oxidation catalyst 2 from the HC inflow amount Min(n) into the exhaust system is obtained. Moreover, the adsorption amount in the HC adsorption catalyst 19 is obtained by multiplying the subtracted value by ηad(n). Moreover, the adsorption amount which currently remains in the HC adsorption catalyst 19 is obtained by subtracting the HC oxidation and desorption amount Mdesorp (n) in the HC adsorption catalyst 19 from the adsorption amount: "Min(n)x{1-ηoxi(n)} ηad(n)" in the HC adsorption catalyst 19. In addition, this remaining adsorption amount is added to the previous HC adsorption amount Mnon(n-1), thereby obtaining and updating the current HC adsorption amount Mmon(n).

Even in a case where such estimation values are used, the HC adsorption amount Mmon(n) almost similar to the case where the HC adsorption amount Mmon(n)) is calculated using Expression (1) on the basis of actual measurement values can be obtained, and the filter forced regeneration and HC adsorption catalyst regeneration control can be performed similarly along the regeneration control routine of Fig. 8. Thereby, emission of HC can be prevented, the incineration timing of adsorbed HC can be properly detected, and adsorbed HC near to an adsorption limit amount is rapidly eliminated from the HC adsorption catalyst, so that the melting loss of the HC adsorption catalyst caused by the occurrence of an excessive temperature rise can be prevented.

According to an aspect of the invention, in a case where HC exceeding a predetermined amount is adsorbed in advance by the HC adsorption catalyst before the forced regeneration control of the filter, HC adsorbed on the HC adsorption catalyst is oxidized, desorbed and eliminated. For this reason, even if the forced regeneration processing of the filter at a relatively high temperature is performed after that, as the HC excessively adsorbed on the HC adsorption catalyst is oxidized, occurrence of an excessive temperature rise can be prevented, and the deterioration or melting loss of the HC adsorption catalyst can be avoided.

According to an aspect of the invention, the HC adsorption catalyst is incinerated in advance while being maintained at the oxidation catalyst temperature or higher and at less than the forced regeneration temperature of the filter by the temperature-raising means before the forced regeneration control of the filter. Thus, when the forced regeneration control of the filter is performed after that, since HC is adsorbed on the HC adsorption catalyst, the HC adsorption catalyst can be prevented from excessively rising in temperature, and the catalyst deterioration and melting loss can be avoided.

According to an aspect of the invention, since the temperature rise of the HC adsorption catalyst is performed by the supply of HC by the expansion stroke injection of an internal combustion engine. Thus, the supplied HC is burnt in the combustion chambers of the internal combustion engine, unburned HC is not supplied to the exhaust system, and HC burning in the exhaust system is not required for every HC desorption processing. Thus, deterioration of the exhaust system can be prevented.

According to an aspect of the invention, during a predetermined elapsed time set according to the capacity of the HC adsorption catalyst, the HC supply amount is controlled so that the HC adsorption catalyst is maintained at less than the forced regeneration temperature. Thus, the driving time during which HC adsorbed on the HC adsorption catalyst is desorbed, oxidized and eliminated can be optimized, and the forced regeneration control of the filter can be prevented from being excessively delayed.

According to an aspect of the invention, even if the exhaust gas temperature during the forced regeneration of the filter has exceeded the hear-resistant temperature of the HC adsorption catalyst, since the HC adsorption catalyst is arranged on the downstream side of the filter, the exhaust gas temperature when reaching the HC adsorption catalyst drops relatively. Thus, the melting loss of the downstream HC adsorption catalyst can be prevented.

## Claims

**1.** An exhaust emission control device comprising:

a filter which traps a particulate in an exhaust system of an internal combustion engine;
an HC adsorption catalyst which is provided in the exhaust system and which adsorbs and desorbs hydrocarbon;
trapping amount calculating means which calculates trapping amount of the particulate trapped by the filter;
adsorbed amount calculating means which calculates adsorbed amount of the hydrocarbon adsorbed on the HC adsorption catalyst;
HC adsorption catalyst regeneration control means which carries out desorption processing of the hydrocarbon adsorbed on the HC adsorption catalyst; and
filter regeneration control means which carries out forced regeneration of the filter when the trapping amount of the particulate exceeds a limit deposition amount, **characterised in that**
when the adsorbed amount of the hydrocarbon exceeds a predetermined amount when the trapping amount of the particulate exceeds the limit deposition amount, the HC adsorption catalyst regeneration control means carries out the desorption processing of the hydrocarbon adsorbed on the HC adsorption catalyst before the filler regeneration control means carries out forced regeneration of the filter and the filter regeneration control means carries out forced regeneration of the filter after the desorption processing has been completed.

**2.** The exhaust emission control device according to Claim 1, further comprising:

temperature-raising means which raises temperature of the HC adsorption catalyst,
wherein the HC adsorption catalyst regeneration control means controls the temperature-raising means so that the HC desorption catalyst is held at an oxidation activating temperature or higher and at less than temperature of the forced regeneration of the filter thereby, carrying out the desorption processing.

3. The exhaust emission control device according to Claim 2, wherein the temperature-raising means carries out supply of hydrocarbon by an expansion stroke injection of the internal combustion engine.

4. The exhaust emission control device according to Claim 2 or Claim 3, wherein a time during which the temperature of the HC adsorption catalyst is raised is set in accordance with a catalyst capacity of the HC adsorption catalyst.

5. The exhaust emission control device according to any one of Claims 1 to 4, wherein the filter and the HC adsorption catalyst are arranged in this order from upstream of the exhaust system.

## Patentansprüche

1. Abgasreinigungsvorrichtung, die aufweist:

   ein Filter, das Partikel in einer Abgasanlage eines Verbrennungsmotors abfängt;
   einen HC-Adsorptionskatalysator, der in der Abgasanlage vorgesehen ist und der Kohlenwasserstoffe adsorbiert und desorbiert;
   eine Abfangmengen-Berechnungseinrichtung, die die Abfangmenge der durch das Filter abgefangenen Partikel berechnet;
   eine Adsorptionsmengen-Berechnungseinrichtung, die die Adsorptionsmenge der auf dem HC-Adsorptionskatalysator adsorbierten Kohlenwasserstoffe berechnet;
   eine HC-Adsorptionskatalysator-Regenerationssteuereinrichtung, die eine Desorptionsverarbeitung der auf dem HC-Adsorptionskatalysator adsorbierten Kohlenwasserstoffe durchführt; und
   eine Filter-Regenerationssteuereinrichtung, die eine Zwangsregeneration des Filters durchführt, wenn die Abfangmenge der Partikel eine Grenzablagerungsmenge übersteigt,

   **dadurch gekennzeichnet, dass**
   wenn die Adsorptionsmenge der Kohlenwasserstoffe eine vorbestimmte Menge übersteigt, wenn die Abfangmenge der Partikel die Grenzablagerungsmenge übersteigt, die HC-Adsorptionskatalysator-Regenerationssteuereinrichtung die Desorptionsverarbeitung der auf dem HC-Adsorptionskatalysator adsorbierten Kohlenwasserstoffe durchführt, bevor die Filter-Regenerationssteuereinrichtung die Zwangsregeneration des Filters durchführt, und die Filter-Regenerationssteuereinrichtung die Zwangsregeneration des Filters durchführt, nachdem die Desorptionsverarbeitung abgeschlossen wurde.

2. Abgasreinigungsvorrichtung nach Anspruch 1, die ferner aufweist:

   eine Temperaturerhöhungseinrichtung, die die Temperatur des HC-Adsorptionskatalysators erhöht,
   wobei die HC-Adsorptionskatalysator-Regenerationssteuereinrichtung die Temperaturerhöhungseinrichtung so steuert, dass der HC-Desorptionskatalysator mindestens auf einer Oxidationsaktivierungstemperatur oder darüber und unter der Temperatur der Zwangsregeneration des Filters gehalten wird, wodurch die Desorptionsverarbeitung durchgeführt wird.

3. Abgasreinigungsvorrichtung nach Anspruch 2, wobei die Temperaturerhöhungseinrichtung Kohlenwasserstoffzufuhr durch eine Expansionstakteinspritzung des Verbrennungsmotors durchführt.

4. Abgasreinigungsvorrichtung nach Anspruch 2 oder Anspruch 3, wobei eine Zeit, in deren Verlauf die Temperatur des HC-Adsorptionskatalysators erhöht wird, in Übereinstimmung mit einer Katalysatorkapazität des HC-Adsorptionskatalysators eingestellt wird.

5. Abgasreinigungsvorrichtung nach einem der Ansprüche 1 bis 4, wobei das Filter und der HC-Adsorptionskatalysator in dieser Reihenfolge von der Stromaufwärtsseite der Abgasanlage angeordnet sind.

## Revendications

1. Dispositif de contrôle d'émission d'échappement comprenant :

   un filtre qui piège une matière particulaire dans un système d'échappement d'un moteur à combustion interne ;

un catalyseur d'adsorption de HC qui est fourni dans le système d'échappement et qui adsorbe et désorbe un hydrocarbure ;
des moyens de calcul de quantité piégée qui calculent une quantité piégée par le filtre de la matière particulaire;
des moyens de calcul de quantité adsorbée qui calculent une quantité adsorbé sur le catalyseur d'adsorption de HC de l'hydrocarbure ;
des moyens de contrôle de régénération de catalyseur d'adsorption de HC qui effectuent un traitement de désorption de l'hydrocarbure adsorbé sur le catalyseur d'adsorption de HC ; et
des moyens de contrôle de régénération de filtre qui réalisent une régénération forcée du filtre lorsque la quantité piégée de la matière particulaire dépasse une quantité de dépôt limite,

**caractérisé en ce que**
lorsque la quantité adsorbée de l'hydrocarbure dépasse une quantité prédéterminée lorsque la quantité piégée de la matière particulaire dépasse la quantité de dépôt limite, les moyens de contrôle de régénération du catalyseur d'adsorption de HC effectuent le traitement de désorption de l'hydrocarbure adsorbé sur le catalyseur d'adsorption de HC avant que les moyens de contrôle de régénération du filtre procèdent à la régénération forcée du filtre et les moyens de contrôle de régénération du filtre procèdent à la régénération forcée du filtre une fois que le traitement de désorption est achevé.

**2.** Dispositif de contrôle d'émission d'échappement selon la revendication 1, comprenant en outre :

des moyens d'augmentation de température qui augmentent la température du catalyseur d'adsorption du HC, dans lequel les moyens de contrôle de régénération de catalyseur d'adsorption de HC contrôlent les moyens d'augmentation de température de sorte que le catalyseur de désorption de HC soit maintenu à une température supérieure ou égale à une température d'activation d'oxydation et à une température inférieure à la température de la régénération forcée du filtre, réalisant de ce fait le traitement de désorption.

**3.** Dispositif de contrôle d'émission d'échappement selon la revendication 2, dans lequel les moyens d'augmentation de température réalisent l'alimentation en hydrocarbure au moyen d'une injection lors de la course de détente du moteur à combustion interne.

**4.** Dispositif de contrôle d'émission d'échappement selon la revendication 2 ou la revendication 3, dans lequel une durée au cours de laquelle la température du catalyseur d'adsorption de HC est augmentée est définie en fonction d'une capacité de catalyseur du catalyseur d'adsorption de HC.

**5.** Dispositif de contrôle d'émission d'échappement selon l'une quelconque des revendications 1 à 4, dans lequel le filtre et le catalyseur d'adsorption de HC sont disposés dans cet ordre en amont du système d'échappement.

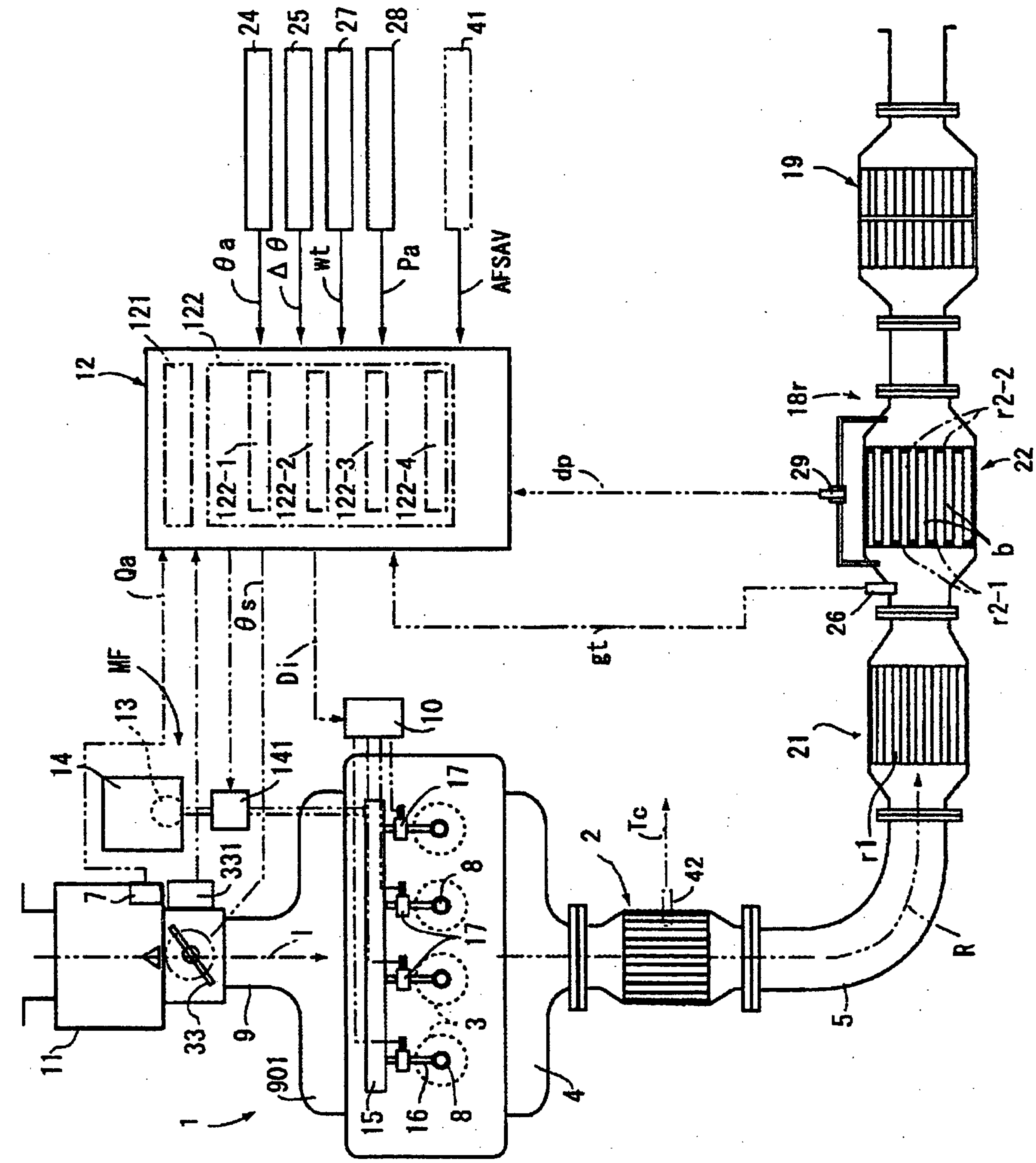
24
25
27
28
41
θa
Δθ
wt
Pa
AFSAV
12
121
122
122-1
122-2
122-3
122-4
Qa
θs
Di
dp
gt
MF
13
14
141
10
7
331
11
33
9
901
1
15
16
8
3
17
2
Tc
42
4
5
R
r1
21
26
r2-1
29
b
22
r2-2
18r
19

FIG. 1

FIG. 2

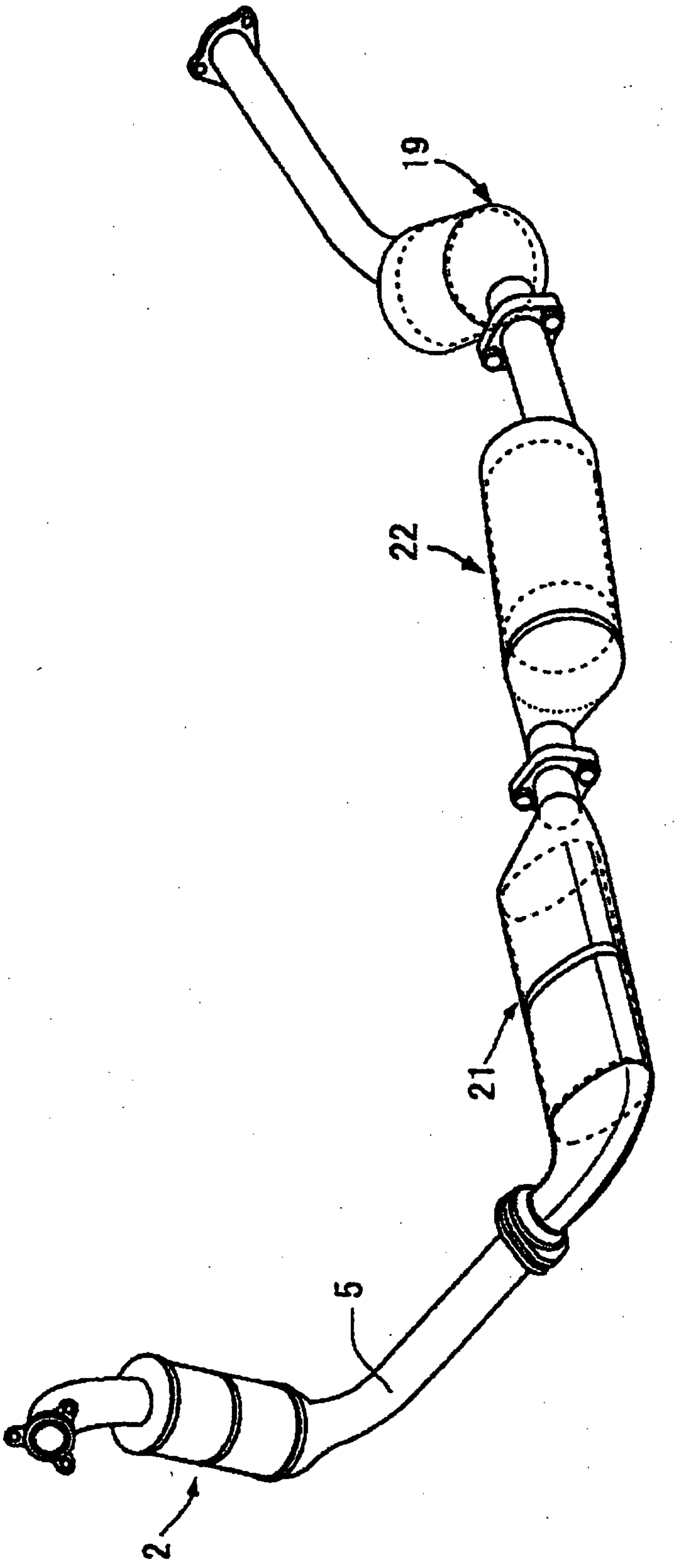

FIG. 3 (a)

FIG. 3 (b)

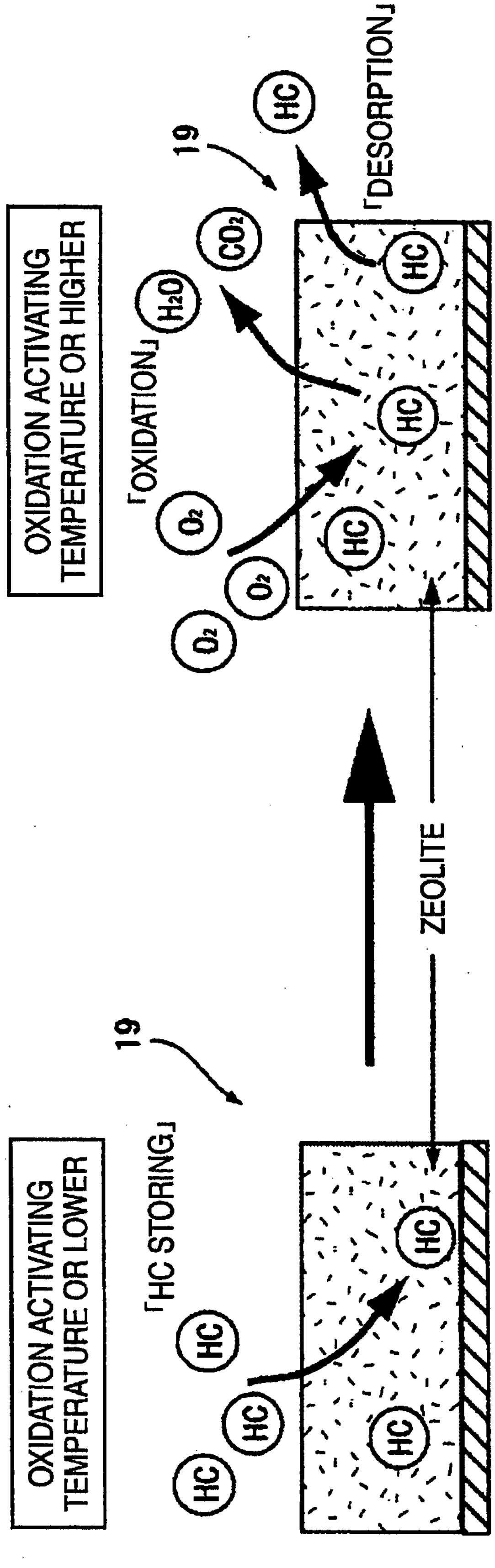
OXIDATION ACTIVATING TEMPERATURE OR LOWER
「HC STORING」
19
HC
ZEOLITE
OXIDATION ACTIVATING TEMPERATURE OR HIGHER
「OXIDATION」
「DESORPTION」
$O_2$
$H_2O$
$CO_2$

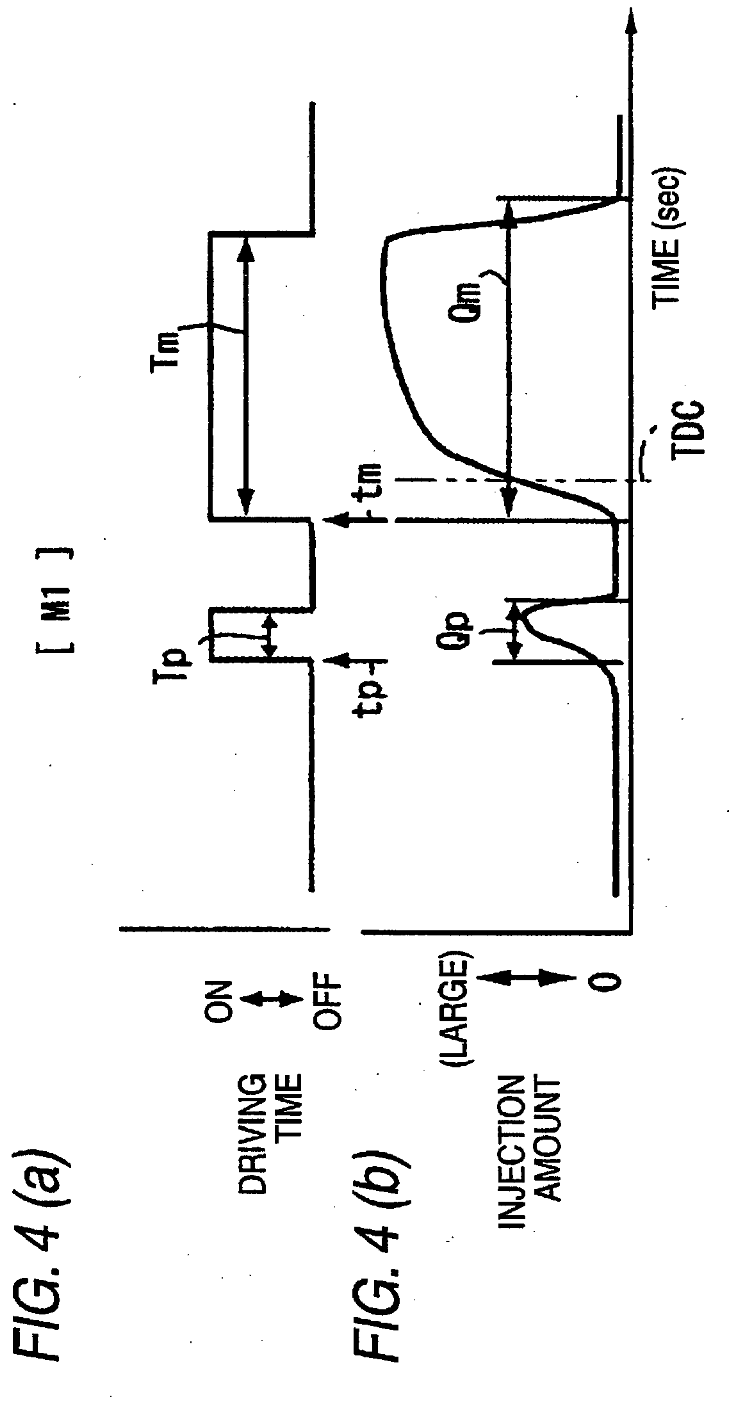
[ M1 ]
Tp
Tm
tp
tm
Qp
Qm
TDC
TIME (sec)
DRIVING TIME
ON
OFF
INJECTION AMOUNT
(LARGE)
0

FIG. 4 (a)

FIG. 4 (b)

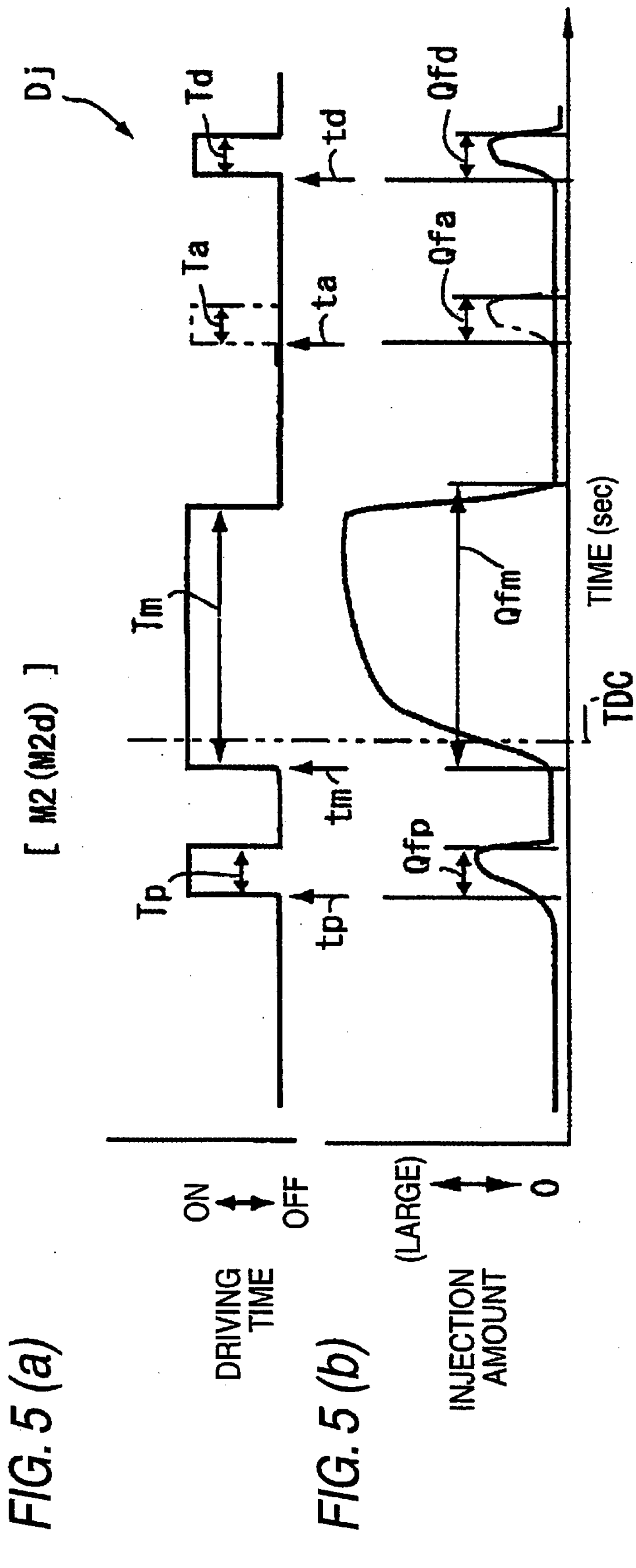
FIG. 5 (a)
DRIVING TIME
ON
OFF
FIG. 5 (b)
INJECTION AMOUNT
(LARGE)
0
[ M2 (M2d) ]
Dj
Tp
Tm
Ta
Td
tp
tm
ta
td
Qfp
Qfm
Qfa
Qfd
TDC
TIME (sec)

FIG. 6

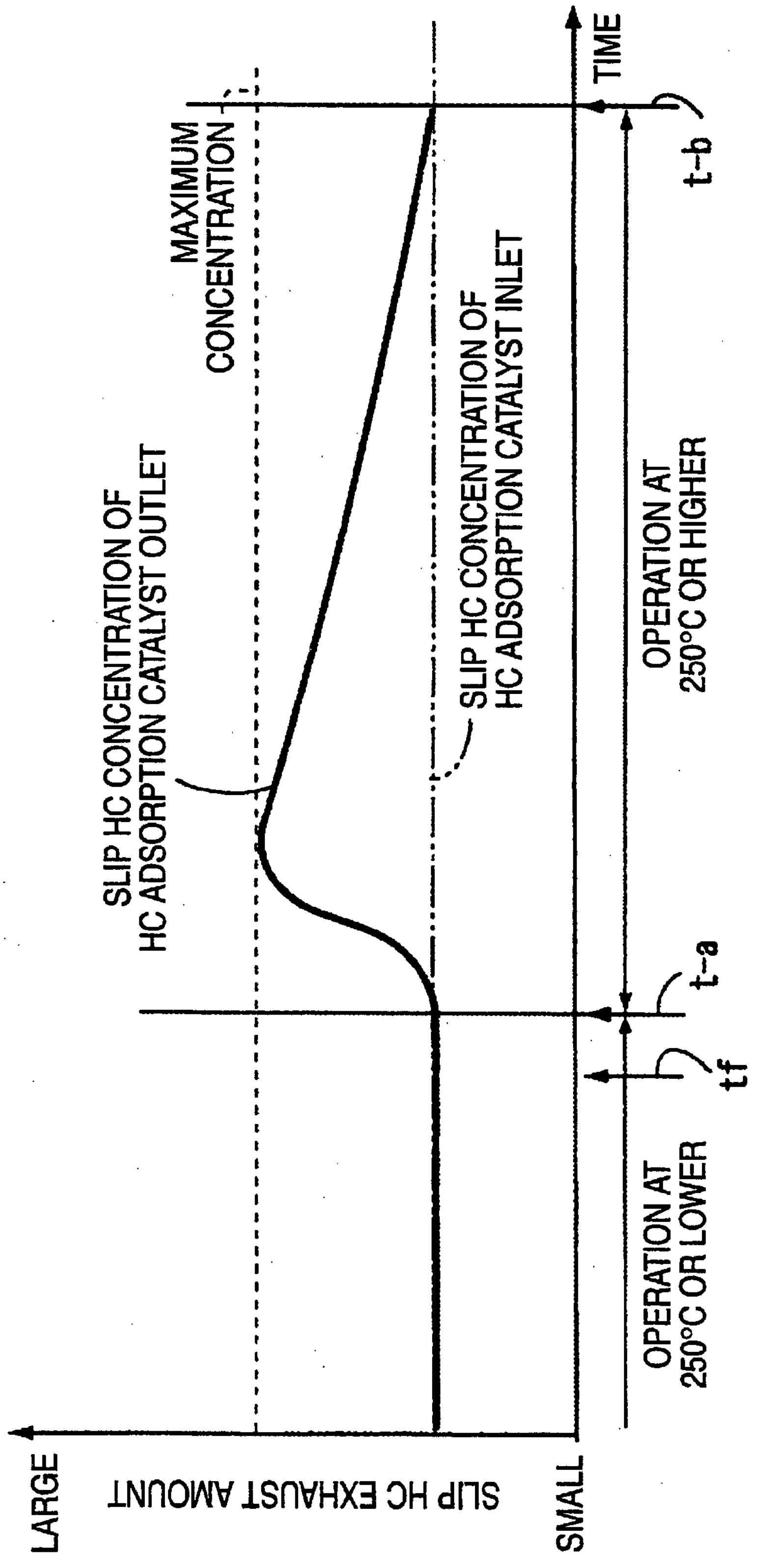
LARGE
SLIP HC EXHAUST AMOUNT
SMALL
MAXIMUM CONCENTRATION
SLIP HC CONCENTRATION OF HC ADSORPTION CATALYST OUTLET
SLIP HC CONCENTRATION OF HC ADSORPTION CATALYST INLET
TIME
t-b
t-a
tf
OPERATION AT 250°C OR HIGHER
OPERATION AT 250°C OR LOWER

FIG. 7

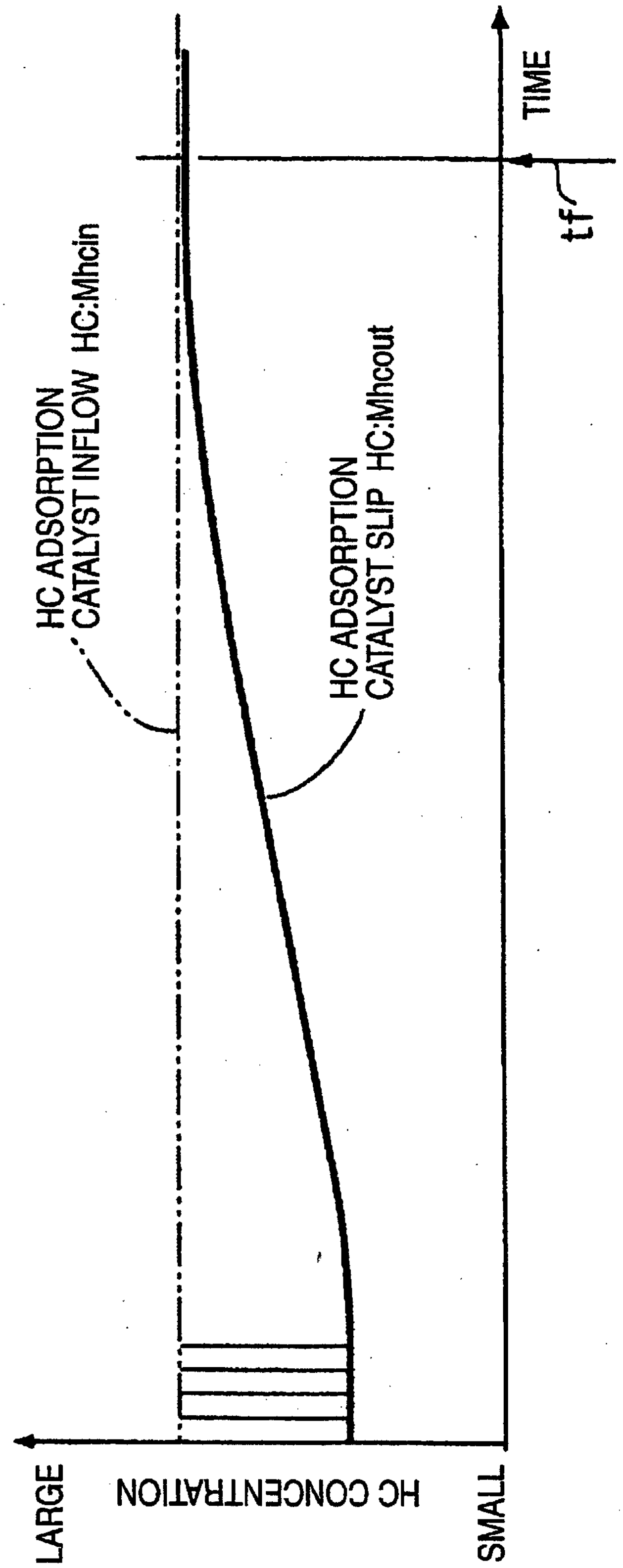
LARGE
HC CONCENTRATION
SMALL
TIME
tf
HC ADSORPTION CATALYST INFLOW HC:Mhcin
HC ADSORPTION CATALYST SLIP HC:Mhcout

FIG. 8

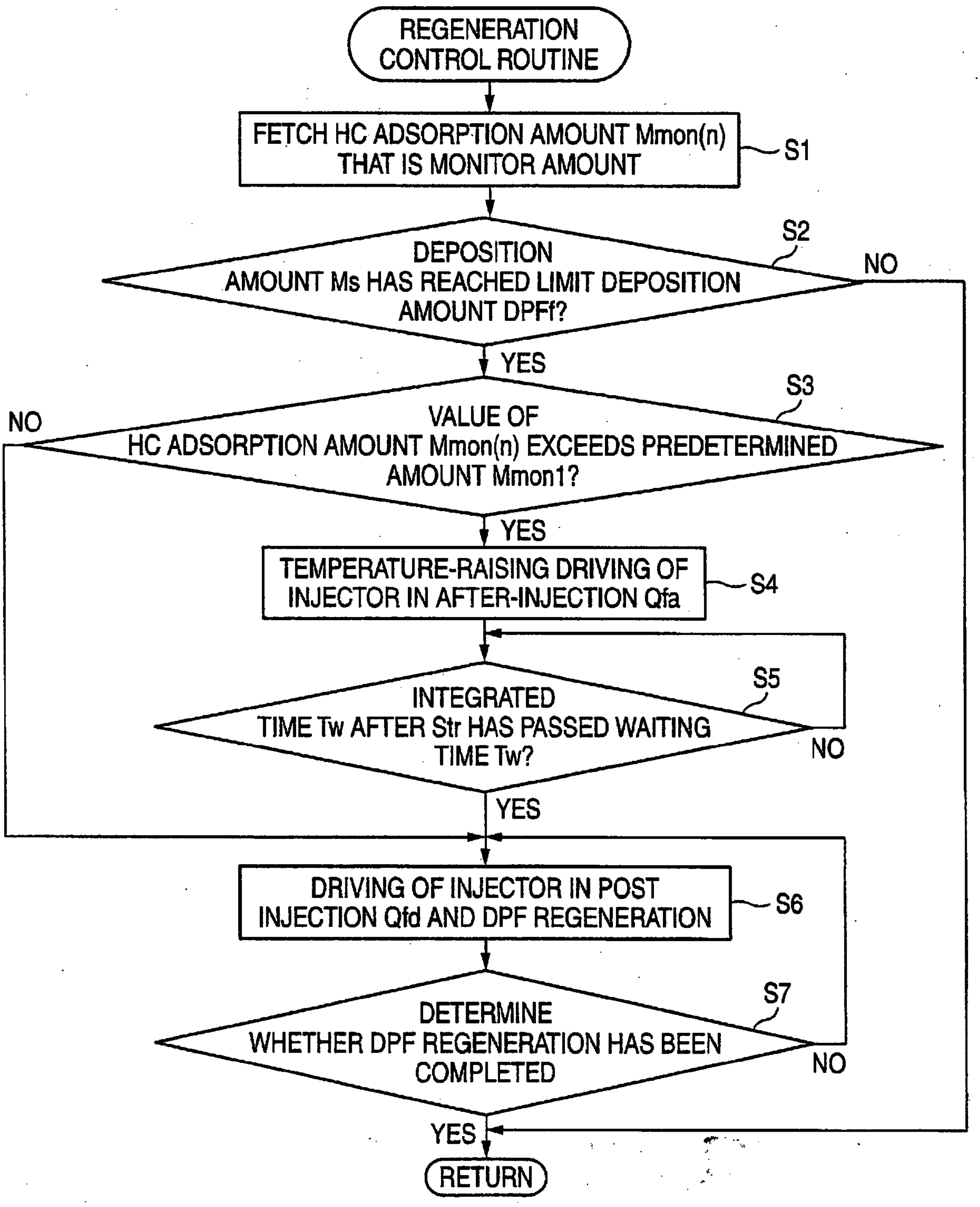
REGENERATION CONTROL ROUTINE
FETCH HC ADSORPTION AMOUNT Mmon(n) THAT IS MONITOR AMOUNT
S1
DEPOSITION AMOUNT Ms HAS REACHED LIMIT DEPOSITION AMOUNT DPFf?
S2
NO
YES
VALUE OF HC ADSORPTION AMOUNT Mmon(n) EXCEEDS PREDETERMINED AMOUNT Mmon1?
S3
NO
YES
TEMPERATURE-RAISING DRIVING OF INJECTOR IN AFTER-INJECTION Qfa
S4
INTEGRATED TIME Tw AFTER Str HAS PASSED WAITING TIME Tw?
S5
NO
YES
DRIVING OF INJECTOR IN POST INJECTION Qfd AND DPF REGENERATION
S6
DETERMINE WHETHER DPF REGENERATION HAS BEEN COMPLETED
S7
NO
YES
RETURN

FIG. 9

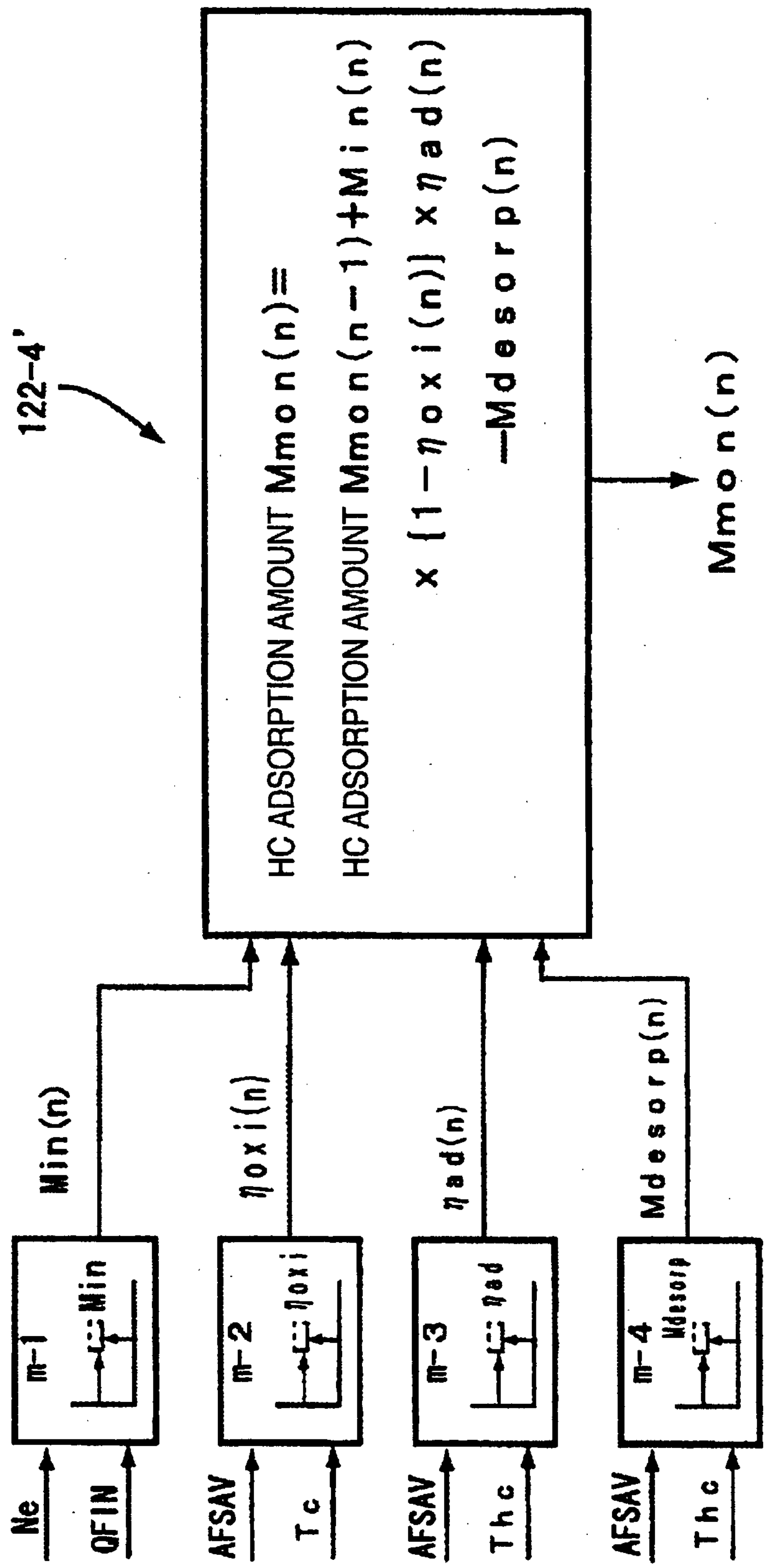
122-4'
HC ADSORPTION AMOUNT Mmon(n)=
HC ADSORPTION AMOUNT Mmon(n-1)+Min(n)
x {1-ηoxi(n)} xηad(n)
-Mdesorp(n)
Mmon(n)
Ne
QFIN
m-1
Min
Min(n)
AFSAV
Tc
m-2
ηoxi
ηoxi(n)
AFSAV
Thc
m-3
ηad
ηad(n)
AFSAV
Thc
m-4
Mdesorp
Mdesorp(n)

FIG. 10

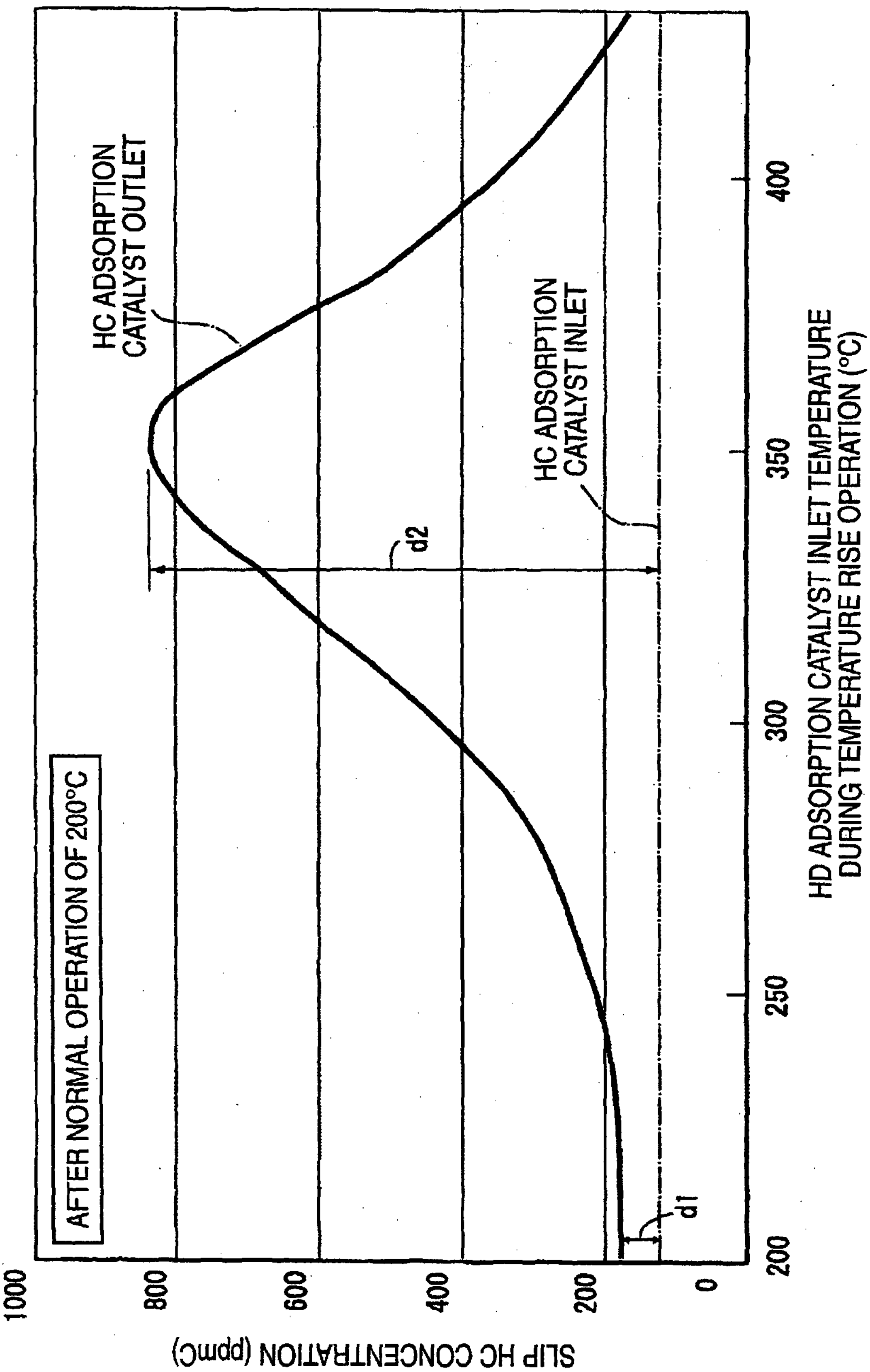
AFTER NORMAL OPERATION OF 200°C
HC ADSORPTION CATALYST OUTLET
HC ADSORPTION CATALYST INLET
d1
d2
SLIP HC CONCENTRATION (ppmC)
1000
800
600
400
200
0
200
250
300
350
400
HD ADSORPTION CATALYST INLET TEMPERATURE DURING TEMPERATURE RISE OPERATION (°C)

FIG. 11

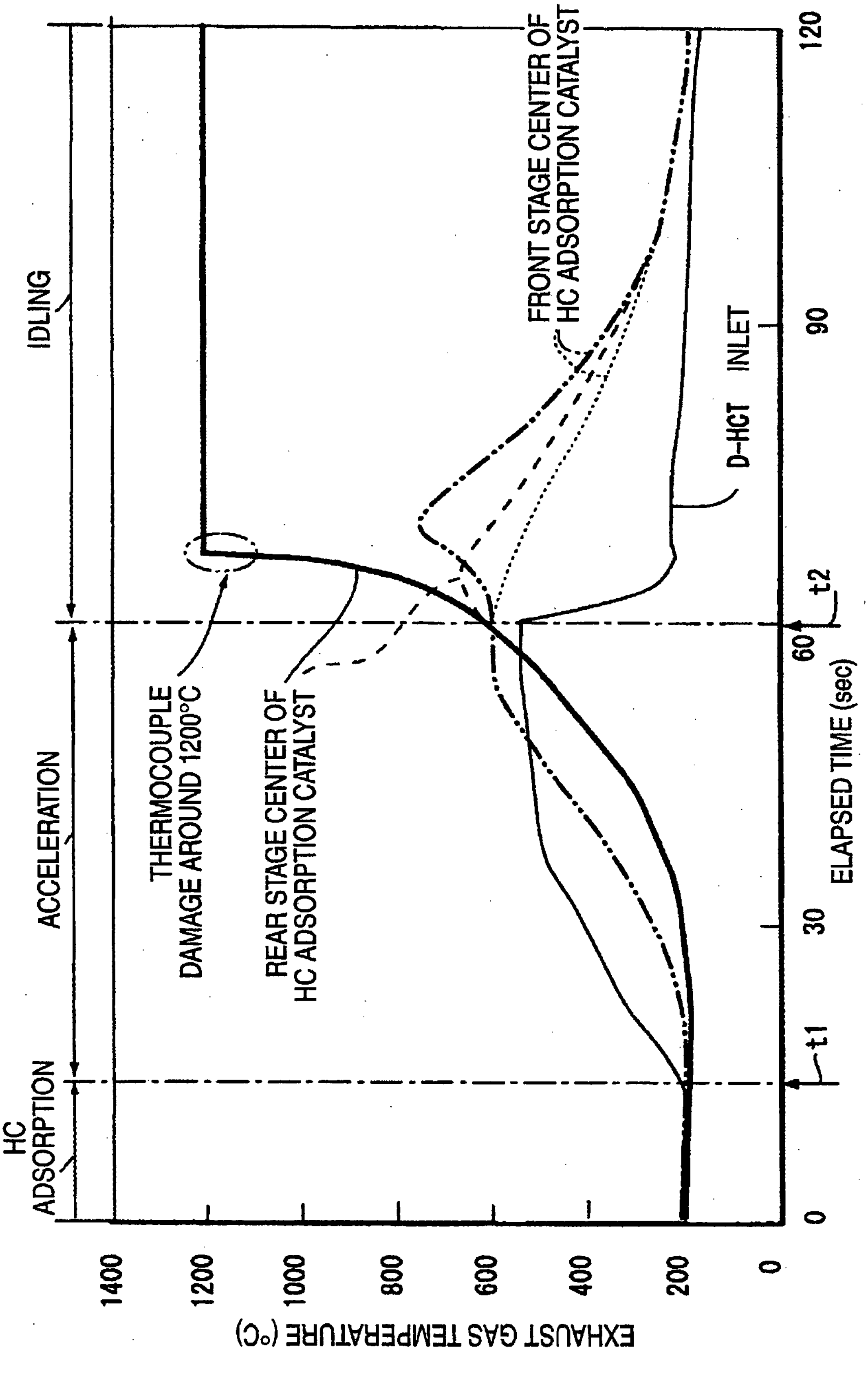
HC ADSORPTION
ACCELERATION
IDLING
THERMOCOUPLE DAMAGE AROUND 1200°C
REAR STAGE CENTER OF HC ADSORPTION CATALYST
FRONT STAGE CENTER OF HC ADSORPTION CATALYST
D-HCT INLET
EXHAUST GAS TEMPERATURE (°C)
1400
1200
1000
800
600
400
200
0
0
t1
30
60
t2
90
120
ELAPSED TIME (sec)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004036543 A